(19) Europäisches Patentamt / European Patent Office / Office européen des brevets

(11) **EP 2 541 320 A1**

(12) **EUROPEAN PATENT APPLICATION**
published in accordance with Art. 153(4) EPC

(43) Date of publication:
**02.01.2013 Bulletin 2013/01**

(51) Int Cl.:
*G03B 21/00* (2006.01)    *G03B 21/56* (2006.01)
*H04N 5/225* (2006.01)    *H04N 5/232* (2006.01)
*H04N 5/74* (2006.01)

(21) Application number: **11747502.0**

(22) Date of filing: **25.02.2011**

(86) International application number:
**PCT/JP2011/054265**

(87) International publication number:
**WO 2011/105546 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2010 JP 2010041338**

(71) Applicants:
• **Sharp Kabushiki Kaisha**
  **Osaka-shi, Osaka 545-8522 (JP)**
• **Research Organization Of Information And Systems**
  **Tachikawa-shi, Tokyo 190-8562 (JP)**

(72) Inventors:
• **GOHSHI Seiichi**
  **Osaka 545-8522 (JP)**
• **ECHIZEN, Isao**
  **Chiyoda-ku,**
  **Tokyo 101-8430 (JP)**

(74) Representative: **Goddar, Heinz J.**
**Boehmert & Boehmert**
**Pettenkoferstrasse 20-22**
**80336 München (DE)**

(54) **IMAGING PREVENTION DEVICE, IMAGING PREVENTION METHOD AND IMAGE DISPLAY SYSTEM**

(57) Light other than visible light is emitted from a video image display section such as a screen, together with display images, so as to degrade image quality of illegally camcorded video images, thereby making it impossible to use the illegally camcorded image contents. A video image display system (1) includes a projector (202) that generates a display image; and a screen (203) on which the image generated by the projector (202) is projected and displayed. On a backside of the screen (203), there is provided an infrared ray emitting unit (204) that emits infrared light from a video image display surface during a period while video images are being displayed on the screen (203). The infrared ray emitting unit (204) includes a wavelength cut filter that substantially does not transmit a predetermined wavelength component close to a visible light region, among the light emitted from the infrared light source.

Fig.1

**Description**

<u>Technical Field</u>

The present invention relates to a technique for preventing an action of illegally camcording an image content displayed on a screen or the like, such as a movie, with an image recording device such as a video camera.

<u>Background Art</u>

Recently, digital image display devices and image pickup devices such as digital cameras have been spread, and has provided further higher image quality, which has made it possible to watch contents having high image quality at low costs. On the other hand, however, actions of picking up contents such as images and moving images displayed on screens or displays with image pickup devices such as digital video cameras and illegally distributing the contents thus obtained have been seen as problematic. The distribution of such pirated DVDs thus illegally obtained is against the protection of copy rights, and causes significant economic losses, and hence, countermeasures against the same have been urgently needed.
As a countermeasure against this problem, a method of degrading an illegally camcorded image by causing infrared light to be camcorded together with an image content when the image content is illegally camcorded has been proposed. Infrared light is not recognized visually by eyes of humans, but in an image captured by an image pickup device such as a camera, infrared light is recorded together with an image content. It is expected that this provides an effect of psychologically deterring an abuser from illegal camcording. For example, JP2002-341449A discloses an anti-camcording technique of providing a low-power infrared light projecting means before or behind a screen on which an image content is projected, so that infrared light is projected toward an audience. JP2010-20263A discloses a technique of providing an infrared light projecting means behind a screen on which an image content is projected, and emitting light having a central wavelength of 800 nm to 980 nm as infrared light toward a camera.
With these anti-camcording techniques disclosed in the above-mentioned publications, however, there arises a problem that in the case where infrared light in a wavelength range as disclosed in the publications is used, an infrared light pattern superposed on an image content on a screen colors the image content. Typically, an image content on a screen is seen as if it was colored in red. The inventors of the present invention found that the coloring phenomenon is perceived visually by eyes of humans, even if light in an infrared light region of 780 nm or more, which is the non-visible light region, is used, let alone in the case where light of a light source such as LEDs (light-emitting diodes) used generally as an infrared light source contains visible light wavelengths. In the case where such a light source is used in a movie theater, a play theater, or the like, the following inconveniences occur: an image content on a screen is colored, and is recognized visually by eyes of an audience in good faith. Particularly, colors of image contents screened in movie theaters are adjusted under strict conditions, with meticulous attention by film producers, film distributing firms, and people in movie theater management. Therefore, even subtle coloration of an image content by the use of the above-described anti-camcording technique is not allowed at all.
It should be noted that JP2010-20263A discloses that light having a central wavelength of 800 nm to 980 nm as infrared light, but generally a wavelength-luminance characteristic of infrared light emitted from a light source has a bell-shaped distribution with a luminance peak at a central wavelength. In other words, light having a central wavelength of 800 nm, for example, can contain light in a wavelength range of less than 800 nm, and possibly causes the problem that the above-described coloring phenomenon is perceived by eyes of humans.

<u>Disclosure of the Invention</u>

The present invention provides a means that, by superposing infrared light on an image content such as a movie in a movie theater, a play theater, or the like, surely degrades image quality of an illegally camcorded video image, while causing eyes of an audience in good faith not to sense degradation of image quality.
An anti-camcording device of the present invention is an anti-camcording device that project infrared light so that infrared light is superposed on a video image displayed on a video image display section, so as to interfere with illegal camcording of the video image displayed on the video image display section, and the anti-camcording device includes: an infrared light source that emits infrared light containing at least light of a wavelength of 780 nm or more, toward the video image display section; and a wavelength cut filter provided before the infrared light source, which substantially does not transmit a predetermined wavelength component of the infrared light, the predetermined wavelength component being a component of a wavelength of 780 nm to 840 nm.
With a video image display device or a video image display method of the present invention, it is possible to degrade display quality of illegally camcorded image contents, without degrading display quality of video images displayed on a video image display section. Therefore, it is possible to make the illegally camcorded image contents useless, and consequently to prevent unauthorized distribution of illegally camcorded image contents.

Brief Description of Drawings

[FIG. 1] FIG. 1 shows a schematic configuration of a video image display system according to one embodiment of the present invention.

[FIG. 2A] FIG. 2A is a schematic cross-sectional view showing a schematic configuration of an infrared light emission section according to one embodiment of the present invention.

[FIG. 2B] FIG. 2B is a schematic plan view showing a schematic configuration of an infrared light emission section according to one embodiment of the present invention.

[FIG. 3] FIG. 3 explains wavelength-luminance characteristics of infrared light in one embodiment of the present invention.

[FIG. 4] FIG. 4 explains a relationship between wavelength-luminance characteristics of infrared light and transmission characteristics of a wavelength cut filter in one embodiment of the present invention.

[FIG. 5A] FIG. 5A is a schematic cross-sectional view showing a schematic configuration of another infrared light emission section according to one embodiment of the present invention.

[FIG. 5B] FIG. 5B is a schematic plan view showing a schematic configuration of another infrared light emission section according to one embodiment of the present invention.

[FIG. 6A] FIG. 6A is a schematic cross-sectional view showing a schematic configuration of still another infrared light emission section according to one embodiment of the present invention.

[FIG. 6B] FIG. 6B is a schematic plan view showing a schematic configuration of still another infrared light emission section according to one embodiment of the present invention.

[FIG. 7] FIG. 7 schematically explains a method for guiding infrared light to a screen by using an optical fiber according to one embodiment of the present invention.

Embodiments for Carrying Out the Invention

An anti-camcording device according to one embodiment of the present invention is an anti-camcording device that superposes infrared light on a video image displayed on a video image display section, so as to interfere with illegal camcording of the video image displayed on the video image display section, and the anti-camcording device includes: an infrared light source that emits infrared light containing at least light of a wavelength of 780 nm or more, toward the video image display section; and a wavelength cut filter provided before the infrared light source, which substantially does not transmit a predetermined wavelength component close to a visible light region, among light emitted from the infrared light source.

With the above-described configuration, when a video image is being displayed on the video image display section, infrared light that is not recognized by eyes of humans but is recorded as a visible image by a recording device such as a video camera is projected onto the video image display section. Besides, the predetermined wavelength component close to a visible light region among light emitted from the infrared light source is not transmitted substantially by the wavelength cut filter, and therefore, the component in the foregoing wavelength range does not reach the video image display section. As a result, when infrared light is superposed on the video image display section, infrared light is not visually recognized as coloration light by eyes of humans, and the infrared light is added as an image (anti-camcording signal) that interferes with the original video image in the illegally camcorded image content. Thus, the display quality of the illegally camcorded image can be effectively degraded.

Thus, by the anti-camcording method of the present invention according to the above-describe configuration, the display quality of illegally camcorded video images can be degraded, without degradation of display quality of video images displayed on the video image display section. Therefore, the illegally camcorded image contents are made useless, and consequently, unclear distribution of illegally camcorded image contents can be prevented.

The aforementioned predetermined wavelength component preferably has a wavelength lower than a wavelength at which a luminance of the infrared light source becomes maximum. More specifically, for example, the predetermined wavelength component is preferably a component of 780 nm to 840 nm, or alternatively, the predetermined wavelength component is preferably a component of 780 nm to 870 nm.

In the case of this configuration, when infrared light is superposed on a video image, it is less likely that the infrared light is visually recognized by eyes of humans as coloration light, and hence, the degradation of video images can be prevented more sophisticatedly.

The infrared light source desirably has wavelengths that provide a maximum luminance in a wavelength range longer than 840 nm.

This configuration makes it possible to surely and effectively exert an interference effect against an illegally camcording camera, while avoiding a coloring phenomenon due to infrared light.

The wavelength cut filter desirably has a characteristic of having a continuous change of 30 dB or more in a transition range between a light transmission range and a light blocking range.

This configuration makes it possible to effectively give an interference noise to an illegally camcorded image, without impairing a light use efficiency with respect to light emitted from the infrared light source.

A wavelength range in which an attenuation amount continuously changes for 30 dB or more in the transition band preferably exists between an upper limit wavelength of the above-described predetermined wavelength component and the wavelength at which the infrared light source provides a maximum luminance.

This configuration makes it possible to sufficiently cut off light in a wavelength range that can be visually recognized by eyes of humans. Therefore, it is possible to provide an anti-camcording device having excellent characteristics, without causing coloration in image contents.

The wavelength at which the infrared light source provides the maximum luminance is desirably 920 nm or less.

Since image pickup elements such as CCDs and CMOSs mounted on usual digital cameras and video cameras have high sensitivity in a range at or below 920 nm, this configuration makes it possible to effectively exert an interference effect against a camera that attempts illegal camcording.

The infrared light desirably has a luminance of 0.0062 mnW/cm$^2$ or more at a predetermined position before the video image display section.

This configuration causes infrared light to be visibly sensed as a noise on an image illegally camcorded by a usual digital camera, video camera, or the like, thereby degrading the illegally camcorded image.

The infrared light further desirably has a luminance of 0.310 nmW/cm$^2$ or more at the predetermined position before the video image display section.

This configuration causes infrared light to be further visibly sensed as a noise on an image illegally camcorded by a usual digital camera, video camera, or the like, thereby further degrading the illegally camcorded image.

Desirably, a luminance on a surface of the video image display section on which the infrared light is projected does not exceed 1.01 nmW/cm$^2$.

This configuration makes it possible to avoid harmfully affecting an audience in good faith even if infrared light is projected toward the audience in a movie theater or the like, and therefore, makes it possible to provide a safe anti-camcording device.

A ratio of a luminance of the infrared light with respect to a luminance of a video image displayed on the video image display section is desirably 0.012 or more at an arbitrary position before the surface of the video image display section.

This configuration makes it possible to adjust infrared light at an arbitrary position before the front surface of the screen when an anti-camcording device is installed. Therefore, this makes it possible to simplify operation steps required for the installation, and to provide an anti-camcording device with which an anti-camcording effect can be achieved surely.

The ratio of a luminance of the infrared light with respect to a luminance of a video image displayed on the video image display section is desirably 0.59 or more at an arbitrary position before the surface of the video image display section..

This configuration makes it possible to adjust infrared light at an arbitrary position before the front surface of the screen when an anti-camcording device is installed. Therefore, this makes it possible to simplify operation steps required for the installation, and to provide an anti-camcording device with which an anti-camcording effect can be achieved more surely.

The infrared light source is desirably any one of an LED, a laser, and a xenon lamp.

Since a generally available light source can be used in this way, an anti-camcording device can be produced at low costs.

The infrared light source may be a light source that emits light having a visible light wavelength. In other words, a light source that emits light containing a visible light component may be used as the infrared light source. In this case, however, it is desirable to use a filter that cuts off a visible light component in combination.

This configuration widens the range of selection for an element used as an infrared light source. Therefor, the provision of an anti-camcording device can be achieved stably and inexpensively.

Desirably, a plurality of the infrared light sources are provided.

In this configuration, in the case where the luminance provided by a single infrared light source is insufficient, a sufficient light emission luminance can be realized by using a plurality of the infrared light sources. Thus, the anti-camcording effect can be improved further.

The anti-camcording device of the present invention is an anti-camcording device that projects infrared light so that the infrared light is superposed on a video image displayed on a video image display section, so as to interfere with illegal camcording of the video image displayed on the video image display section, and the anti-camcording device includes an infrared light source that emits infrared light containing light of a wavelength of 780 nm or more, wherein the infrared light emitted by the infrared light source and projected to the video image display section has a luminance with which the infrared light is substantially invisible to eyes of humans in a wavelength range of 780 nm to 840 nm, and has a luminance with which the infrared light is visible on an image obtained by camcording the video image with use of a camera, at a wavelength at which the luminance becomes maximum.

According to the above-described configuration, when video images are being displayed on the video image display section, infrared light that is not perceived by eyes of humans but is recorded as a visible image by a recording device such as a video camera is projected onto the video image display section. This results in that when infrared light is superposed on the video image display section, the infrared light is not visually recognized by eyes of humans as coloration light, and is added as an image (anti-camcording signal) that interferes with the original video images into the illegally camcorded video contents, thereby effectively degrading display quality of illegally camcorded images.

In this way, by the anti-camcording method of the present invention, it is possible to degrade image quality of illegally camcorded video images, without degrading display quality of video images displayed on the video image display section. Therefore, the illegally camcorded image contents can be made useless, and consequently, unclear distribution of illegally camcorded image contents can be prevented.

The infrared light is desirably light that has passed through a wavelength cut filter after being emitted from the infrared light source.

This configuration makes it possible to more sophisticatedly generate light that is not perceived by eyes of humans but is recorded as a visible image by a recording device such as a video camera. Therefore, it is possible to surely avoid the conventional problem of the coloration of a video image, and surely achieve the anti-camcording effect against an illegally camcording camera.

Further, in the anti-camcording method of the present invention, infrared light is projected so that the infrared light is superposed on a video image displayed on the video image display section so as to interfere with the illegally camcording of the video image displayed on the video image display section, wherein the infrared light, in a wavelength range of 780 nm to 840 nm, is substantially unrecognizable to eyes of humans who observe the video image display section, and at a wavelength at which the infrared light has a maximum luminance, the infrared light is visually recognized on an image obtained by camcording the video image with use of a camera.

Further, a video image display system of the present invention is a video image display system that includes an image formation section that generates a display image according to a video image signal, and a video image display section on which the image generated by the image formation section is projected and displayed, and the video image display system further includes an infrared light projection device that projects infrared light to the video image display section from a back face or a front face of the video image display section while video images are being displayed on the video image display section, wherein the infrared light emitted from the infrared light projection device and projected onto the video image display section, in a wavelength range of 780 nm to 840 nm, has such a luminance that the infrared is substantially unrecognizable to eyes of humans, and at a wavelength at which the infrared light has a maximum luminance, the infrared light has such a luminance that the infrared light is visually recognized on an image obtained by camcording the video image with use of a camera.

According to the above-described configuration, while video images are being displayed on the video image display section, infrared light that is not perceived by eyes of humans but is recorded as a visible image by a recording device such as a video camera is projected onto the video image display section. Consequently, when infrared light is superposed on the video image display section, the infrared light is not visually recognized by eyes of humans as coloration light, whereas the infrared light is added, to an illegally camcorded image content, as an image (anti-camcording signal) that interferes with original video images. Thus, the display quality of illegally camcorded images can be effectively degraded.

The following description explains a more specific embodiment of the present invention.

Inventors of the present invention focused attention on the following point: whereas light other than visible light, such as infrared rays or ultraviolet rays, is hardly recognized visually by humans, wavelengths out of the visible light region such as infrared rays, ultraviolet rays, etc. are also detected as noises by CCD and CMOS image sensors as image pickup elements of digital cameras and digital video cameras used in illegal camcording, due to instability; specification, etc. of elements themselves. Then, the inventors found that when video images are being displayed on a screen in a movie theater or the like, light having a waveform difficult for humans to recognize could be emitted as anti-camcording signals at the same time, from the image display surface, so that the above-mentioned anti-camcording signals can be captured as perceivable signals in an image content illegally camcorded by a video camera or the like. With this finding, the inventors completed the present invention. In other words, according to the present invention, in the case where an image content captured by a video camera is reproduced, an image based on anti-camcording signals is recognized visually as a noise that interferes with an original video image, whereby quality of the illegally camcorded image content can be degraded. This makes viewing of the video image difficult, thereby consequently preventing unclear distribution of illegally camcorded image contents.

Embodiment 1

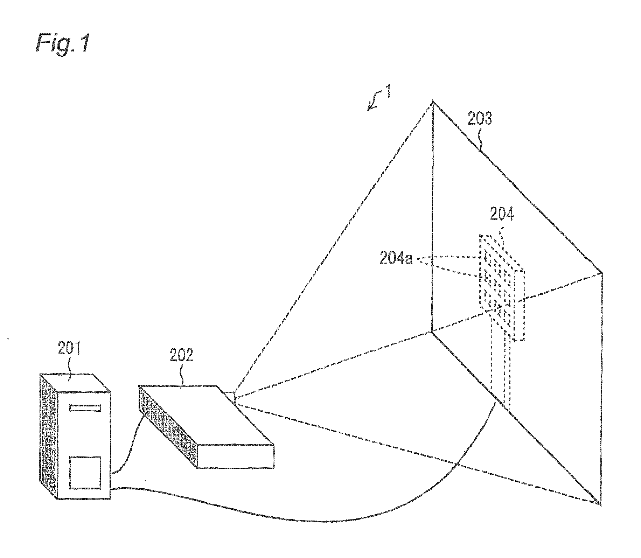

One embodiment of the present invention, realized based on the above-described technical ideas, is explained below, with reference to FIGS. 1 to 7. It should be noted that the embodiment explained herein is an exemplary embodiment of the present invention, and the present invention is not limited to this.

Explained herein as the present embodiment is a video image display system for screening video images such as movies in a movie theater or a play theater. With the video image display system of the present embodiment, in the case where an image content such as a movie screened in a theater is camcorded with a video camera, a camera mounted on a portable terminal, or the like, the display quality of the thus camcorded digital image content is degraded to a level at which the content is unwatchable, whereby unauthorized distribution of illegally camcorded image contents can be prevented.

FIG. 1 shows a schematic configuration of a video image display system 1 according to the present embodiment. The video image display system 1 (video image display device) includes a video image reproducer 201, a projector 202 (image formation section), a screen 203 (video image display section), and an infrared ray emitting unit 204 (light emission part).

The video image reproducer 201 temporarily stores image contents captured from outside, subjects the same to decoding processing for enabling image formation, and transmits digital video image signals obtained after the processing to the projector 202. As the configuration of the video image reproducer 201, a conventionally known configuration of a digital video image reproducing device can be applied. It should be noted that in the video image display system 1 as in the present embodiment, an image content to be reproduced by the video image reproducer 201 is usually an image content composed of a plurality of image frames (moving image contents), but the image content is not limited to that in the present invention. In other words, the image content may be a still image content.

The projector 202 forms display images with display elements incorporated therein, based on the video image signals transmitted from the video image reproducer 201. The images thus formed are projected onto the screen 203 with use of a projection optical system incorporated therein. As the configuration of the projector 202, a conventionally known configuration of a front-projection-type image display device can be applied.

The screen 203 displays images projected by the projector 202.

The infrared ray emitting unit 204 is provided on a back face side of the screen 203, and emits infrared light toward a front face side during a period while video images are being displayed on the screen 203. Here, the back face side of the screen 203 is a side opposite to a face on which images are displayed (a face that faces an observer or an auditorium), and the front face side of the screen 203 is a side on which images are displayed (side on which an observer is present).

Here, the following description explains specific configurations of the screen 203 and the infrared ray emitting unit 204.

The screen 203 has a configuration identical to that of a conventional usual screen that displays video images in a movie theater. It should be noted that the conventional usual screen is a black shroud having a multiplicity of pores (pores having a diameter of about 2 to 3 mm), and having a white paint applied over a surface thereof, whereby an image display surface is formed.

The infrared ray emitting unit 204 is arranged on the back face side of the screen 203, as described above. Further, in the present embodiment, the infrared ray emitting unit 204 is provided at a position corresponding to a substantial central portion in an image display region of the screen 203.

In the infrared ray emitting unit 204, there are infrared light emission sections 204a, in an array of three in the vertical direction and three in the horizontal direction, which means that they are nine in total. In each infrared light emission section 204a, an infrared LED is provided.

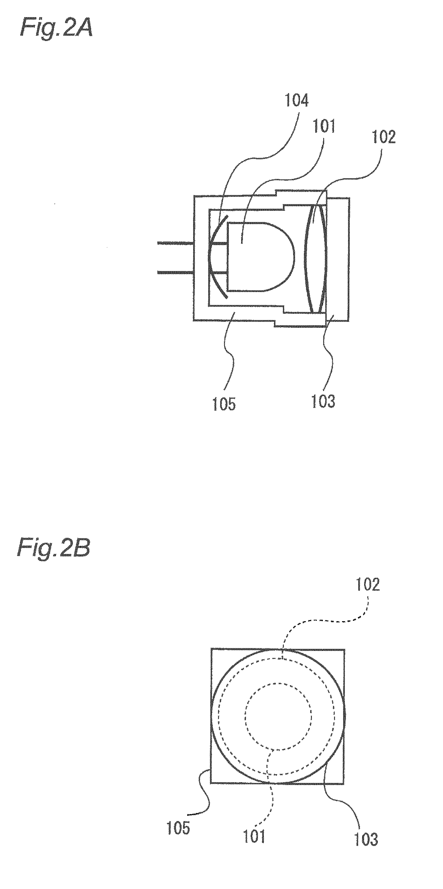

As a configuration of the infrared light emission section 204a, for example, a configuration shown in FIGS. 2A and 2B can be used. The infrared light emission section 204a shown in FIGS. 2A and 2B includes an infrared light source 101, a lens 102, a wavelength cut filter 103, a reflection plate 104, and a case 105.

The infrared light emission section 204a uses a bullet-shaped LED element that emits infrared light, as the infrared light source 101. The lens 102 is used for condensing a light flux so as to further increase the effect of interference against an illegally camcording camera. The wavelength cut filter 103 is a filter that cuts off a component in a predetermined wavelength range, among light emitted from the infrared light source 101. The wavelength cut filter 103 is provided for a purpose of surely avoiding the coloration of an image content with infrared light, and obtaining a sufficient anti-camcording effect. It is desirable that the wavelength cut filter 103 is provided close to the infrared light source 101, and is integrated with the infrared light source 101 and the case 105. This is intended to avoid the following phenomenon: infrared light, reaching the screen 203 without passing through the filter, colors an image content (typically in red), and degrades the image.

With the above-described configuration, infrared light emitted from the infrared ray emitting unit 204 passes through the pores provided in the screen 203, thereby being projected toward the observer (the auditorium).

The following description explains desirable optical characteristics in the present embodiment.

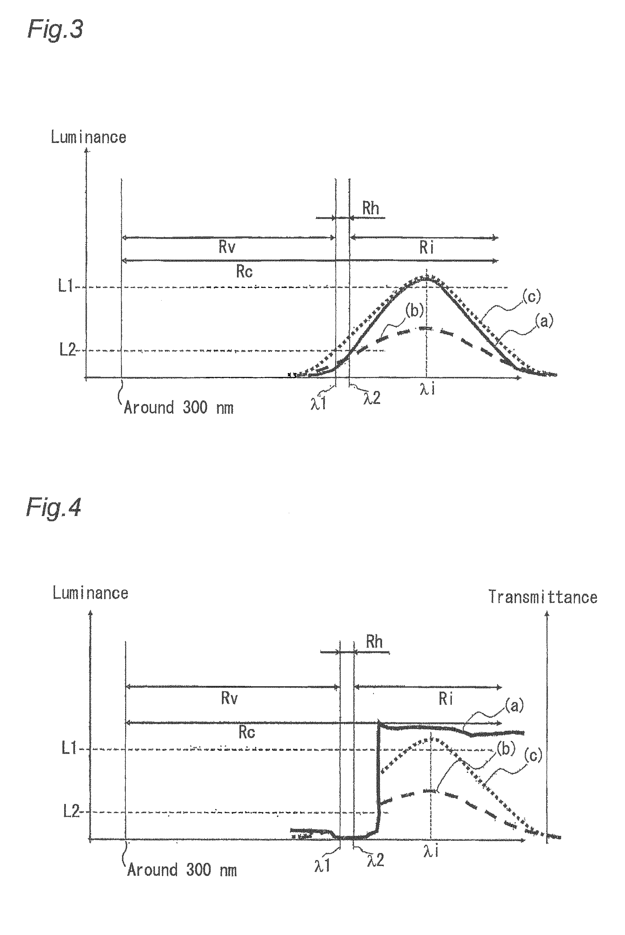

Light emitted from LED elements used as the infrared light source 101 in the present embodiment generally exhibits a wavelength distribution having a light emission intensity peak at a predetermined wavelength (peak wavelength), as shown in FIG. 3. Currently, there are many products available as infrared LED elements, and they have various peak wavelengths. Generally, infrared LED elements having peak wavelengths on a short wavelength side tend to emit light in wavelength ranges closer to the visible light region. The upper limit of wavelengths of light visually recognized by eyes of humans, that is, the visible light region, is generally said to be about 780 nm. Actually, however, the upper limit wavelength of visually recognizable light varies with individuals, and light having wavelengths over 780 nm can be visually recognized by eyes of many individuals. Experiments carried out by the inventors of the present invention specifically proved that light having wavelengths up to 840 nm, which are in the infrared light region, can be recognized visually by eyes of many individuals. There is inter-individual variability regarding the upper limit of wavelengths of light visually recognized by humans, and the experiments carried out by the inventors of the present invention also proved that some people can visually recognize further longer wavelengths, up to 870 nm.

According to this, when light that contains at least light having wavelengths of 780 nm to 840 nm, i.e. light in the infrared light region, is projected onto the screen 203, most of the projected light is visually recognized as colored light (typically red light), superposed on an image content, by eyes of many of an audience. This causes a problem that the audience feels strangeness, or discomfort, to the image content itself. It can be considered also that particularly in a place where many and unspecified persons gather, such as a movie theater, there are those who can recognize light having further longer wavelengths, up to 870 nm. According to these findings, when infrared light in the above-mentioned wavelength range is superposed on an image content, the image content is colored and image degradation occurs. Thus, it was found that a serious problem occurs in the use in movie theaters where image quality adjustment has been executed under strict evaluation criteria.

Consequently, it is considered desirable that light emitted from an anti-camcording device to a screen has light emission characteristics that satisfy the following two requirements at the same time. The first requirement is that in a wavelength range (Rh) as a wavelength range that can be visually recognized by eyes of humans (e.g., 780 nm to 840 nm, or 780 nm to 870 nm), a luminance of infrared light on the screen 203 is lower than a luminance L2 at the lowest level that can be perceived by eyes of humans. The second requirement is that at a wavelength ($\lambda$i) at which an infrared electricity on the screen has a maximum value, which falls in a wavelength range (Ri) that exerts influences on images illegally camcorded by an illegal camcorder, and falls in a wavelength range for longer wavelengths than those in the wavelength range Rh that are visually recognized as being red by eyes of humans, the light has a luminance greater than a luminance L1 that image pickup elements of the illegal camcorder can sense. An exemplary light emitting element satisfying these requirements has a characteristic indicated by a characteristic curve (a) in FIG. 3, and the above-described two requirements are expressed by the following formulae (1) and (2):

$$L(\lambda) < L2 \quad : \quad \lambda1 \leq \lambda \leq \lambda2 \qquad (1),$$

$$L(\lambda i) > L1 \qquad (2)$$

Here, the luminance $L(\lambda)$ is an electricity per unit area owing to infrared light at a predetermined distance (e.g., 4 m) from on the screen, at a wavelength $\lambda$ satisfying $\lambda1 \leq \lambda \leq \lambda2$.

It should be noted that an infrared light source that emits light having a peak wavelength on a long wavelength side, longer than Rh, is desirably selected as an infrared light source that satisfies the formula (1). The reason for this is as follows. As described above, light emitted from an infrared light source is usually light having a characteristic of bell-shaped distribution as shown in the characteristic curve (a) in FIG. 3. Therefore, an infrared light source that emits light having a lower peak wavelength has a tendency of a relatively lower luminance on a short wavelength side, and consequently it is less possible that light emitted from such a light source would contain light in the wavelength range Rh.

The sensitivity of image pickup elements such as CCDs or CMOSs incorporated in usual digital cameras, video cameras, etc., however, has a characteristic of abruptly attenuating when the wavelength of incident light exceeds 920 nm. Therefore, as light of an infrared light source has a longer peak wavelength, longer than 920 nm, as an optical characteristic thereof, the light use efficiency with respect to light of the light source, that is, the interference effect against a camera used for illegal camcording, more drastically decreases. Therefore, it is preferable that an infrared light source that emits light having a peak wavelength of not more than 920 nm is preferably used from the viewpoint of the use efficiency.

The following description explains desirable characteristics of infrared light projected to the screen.

First, the inventors of the present invention prepared four types of commercially available cameras (a CCD video camera, a CMOS video camera, a digital camera, a camera of a portable telephone) as cameras that are possibly used for illegal camcording, and calculated respective minimum infrared light luminances that provide interference effects to the cameras based on the experiment results. The results are shown in Table 1, Column (1) below.

[Table 1]

| Type of camera | (1)Minimum luminance of infrared light visually recognizable in camcorded image [mW/cm$^2$] | (2) Luminance ratio of infrared light with respect to 40 % white image |
|---|---|---|
| CCD video camera | 0.0072 | 0.24 |
| CMOS video camera | 0.018 | 0.59 |
| Digital camera | 0.00036 | 0.012 |
| Camera in portable telephone | 0.00036 | 0.012 |

It should be noted that conditions used in the determination of the above-described minimum luminances were as follows.

[Table 2]

| Image content projection condition | 40% white image |
|---|---|
| Irfrared light projection condition | Projecting from back face side of screen |
| | Using infrared LED (peak wavelength:870 nm) |
| | Infrared ray filter's transmittance of infrared ray peak wavelength: 50 % |
| | Blinking predetermined pattern at 10 Hz |
| | Light emission angle of infrared LED: ± 14° |
| Camera camcording condition | Camcording at 1.5 m from front surface of screen |
| | Manual auto-focus, auto-exposure |
| Screen | Mat type, aperture ratio: 9.3 %, size: 515 mm × 364 mm, gain (diffusion reflection ratio): 0.7, emission angle: ± 70° |

In the experiments carried out by the inventors, a 40% white image as an image content was projected onto a screen from a projection device provided before the screen, at the same time when infrared light was projected, and this image was camcorded by the above-described 4 types of cameras. Thereafter, the images thus camcorded by the cameras were displayed on a liquid crystal display, and minimum luminances of infrared light when experiment participants could visually recognize the infrared light pattern were determined. It should be noted that the 40% white image, used as the image content, has brightness equivalent to average brightness of images in television broadcasting. The minimum luminance of infrared light is a luminance of infrared light observed at a position of 1.5 m from the front surface of the screen.

As a result, it was proved that, as shown in the column (1) in Table 1, the minimum luminance that can be visually recognized in a camcorded image varies with the type of a camera. Besides, it is considered that as long as the luminance of infrared light is at least 0.0072 mW/cm$^2$ or more, an effect of the light as an interference light can be achieved against at least a part of cameras, and it was found that in order to exert an interference effect on a greater number and variety of cameras, a luminance of 0.018 mW/cm$^2$ or more is needed.

From what is described above, a luminance of at least 0.0072 mW/cm$^2$ or more is desirable as the luminance L1 shown in FIG. 3, and a luminance of 0.018 mW/cm$^2$ or more is more desirable in order to exert an interference effect against a greater number and variety of cameras

Next, the inventors of the present invention examined a relative luminance with respect to a luminance of an image content, regarding each luminance shown in Table 1, the column (1), and obtained results as shown in Table 1, the column (2). Here, the calculation was carried out by assuming that the luminance of the image content was 0.0305 mW/cm$^2$.

It should be noted that the conditions used in the determination of they luminance of the image content are as follows. As a screen, a screen having an aperture ratio of 9.3 %, a gain (diffusion reflection ratio) of 0.7, and an emission angle of ± 70° was used, and a 40% white image identical to the condition shown in the column (1) of Table 1 was projected over an entirety of the screen. This calculation was carried out on the assumption that the above-described screen was a surface light source that diffuses reflection light at the emission angle of ± 70°C.

It should be noted that the luminance ratio determined herein can be used as, for example, an index when the infrared light intensity of the anti-camcording device according to the present embodiment is placed and adjusted in a movie theater. This luminance ratio can be utilized at an arbitrary position where an illegally camcording camera could be placed. Therefore, this allows labors needed for position adjustment of measurement equipment to be omitted, and simplifies the infrared light intensity adjustment.

From what has been described above, the luminance ratio of infrared light t a predetermined position with respect to an image content is desirably at least 0.012 or more, and more desirably, 0.59 or more in order to exert an interference effect against a greater number and variety of cameras.

If the infrared light luminance is extremely increased, however, a possibility of harmfully affecting human bodies arises, which requires considerable attention. The inventors of the present invention then calculated an exposure limit according to JIS (Japan Industrial Standard) C6802 (Standard Title: Laser Product Safety Standard), so as to determine a luminance upper limit of infrared light. As a result, it was found that in the anti-camcording method of the present embodiment, the infrared light luminance on the front surface of the screen desirably at least does not exceed 1.01 mW/cm$^2$.

It should be noted that the laser projection conditions used in the calculation are as fellows. The output was set to Class 1 (limit value for safety upon observation with eyes) of JIS (Japan Industrial Standard) C6802 (Standard Title: Laser Product Safety Standard). The wavelength was set to 870 nm, and the projection time was set to continuous projection. The aperture diameter was 7 mm, equal to the size of a pupil of a human. The distance from the light source was set to 100 mm.

Thus, as the calculation conditions, it was assumed that a human continuous observes infrared light at a close distance of 100 mm from the light source. Such conditions are unrealistic in usual use of the present anti-camcording method, but the conditions, which are considered to be extreme, dared to be used for the purpose of providing a more safe anti-camcording technique that does not harmfully effect human bodies.

From the results shown in Table 1, the column (2), it can be understood that an infrared light luminance corresponding to a luminance of an image content is needed in order to effectively give interference noises to illegally camcording cameras. It is, however, usually difficult to obtain a single infrared LED element that is capable of emitting high-luminance light, for example, in the case where infrared light with a high luminance is needed. Therefore, when an anti-camcording device is produced according to the present embodiment, a plurality of infrared LED elements are desirably used so as to increase the luminance.

In the case where a plurality of LED elements are used, however, the following points have to be considered. The following explains this, while referring to FIG. 4.

As shown in FIG. 4, the light emission luminance distribution in the case of a single LED element exhibits a characteristic as indicated by a characteristic curve (b) shown in FIG. 4, with which it is usually difficult to surely give interference noises against illegally camcording cameras. In other words, the formula (2) is not satisfied. Then, a plurality of LED elements each of which has the characteristic of the curve (b) shown in FIG. 4 are used. Then, the peak luminance increases, as indicated by a characteristic curve (c) in FIG. 4, which satisfies the aforementioned formula (2). On the other hand, however, the luminance on the short wavelength side also increases at the same time, which increases the possibility that the luminance in Rh increases to such a level as to cause the infrared light to be visually recognized by eyes of humans. In other words, in this case, whereas the formula (2) is satisfied, the formula (1) is not satisfied. This means that the following problem could occur: as an infrared light having a greater intensity is projected so as to cause an illegally camcording camera to sense infrared light surely, the coloring phenomenon in an image content is more conspicuous, and is visually perceived more.

As a means for avoiding such a problem, a wavelength cut filter 103 having a transmission characteristic as indicated by a characteristic curve (a) shown in FIG. 4, for example, may be used. A filter with a difference of 50 dB or more between its stopband and its passband is used desirably. More desirably, a filter having a transmittance at Rh of 0 % or nearly 0 %, and a transmittance at a peak wavelength λi of 100 % or nearly 100 % is used as the wavelength cut filter 103. In the case where the transmittance at a peak wavelength λi of 100 % or nearly 100% cannot be realized, however, measures such as increasing a light amount of an infrared light source may be adopted appropriately.

Further, a filter having a transition band (range between a stopband and a passband) of 30 dB or more is preferred as the wavelength cut filter 103. Further, in this transition band, preferably, there is a difference of 30 dB or more between an upper limit wavelength λ2 (at least 840 nm, desirably 870 nm) of the wavelength range Rh at which the coloration can be observed by eyes of humans and a peak wavelength λi of an infrared light source used as an interference light source. The reason for this is as fellows. First, if a wavelength range in which an attenuation amount continuously changes for 30 dB or more in the transition band overlaps the wavelength range Rh, the coloration tends to easily occur in an image content. Besides, if a wavelength range in which an attenuation amount in the transition band continuously changes for 30 dB or more overlaps a wavelength range for longer wavelengths than the peak wavelength $\lambda i$, the efficiency of the infrared light source (i.e., light use efficiency of infrared light that can exert interference effects against illegally camcording cameras) significantly decreases.

By the above-described method, an anti-camcording technique having a superior effect that cannot be achieved conventionally can be provided, which is a technique of giving interference noises exclusively to illegally camcorded images camcorded by cameras used for illegal camcording, without being visually recognized by an audience in good faith.

It should be noted that the above explanation describes a case where the infrared light source is placed on the back face side of the screen, but the present invention is not limited to this configuration, and the infrared light source may be placed on a front face side of the screen. Further, the foregoing explanation describes an exemplary case where an image content is projected from the front face side to the screen, but the present invention is not limited to this. As the image content display style, an image content may be projected from the screen back face, or a display such as a liquid crystal display device or a plasma display device may be used.

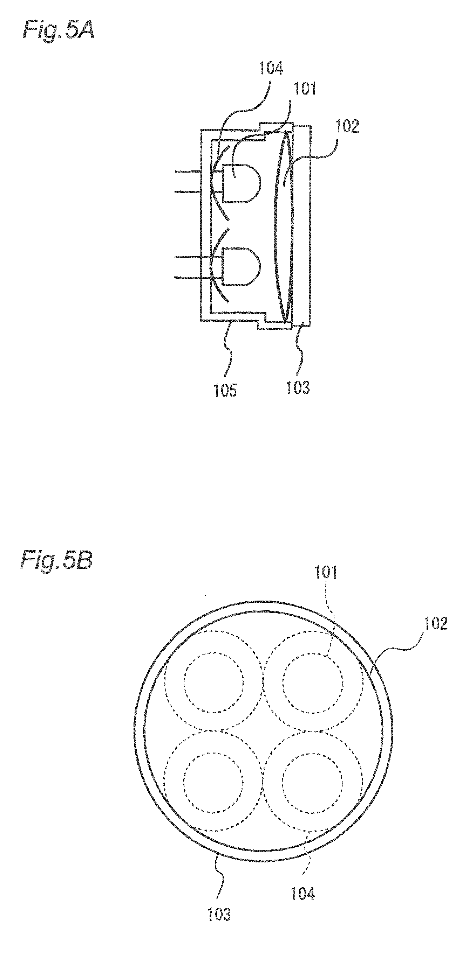

Further, in the case shown in FIGS. 2A and 2B, one LED is used as an infrared light source in each infrared light emission section 204a as described above, but the number is not limited to that in this example. For example, two or more LED elements 101 may be provided in a common case 105, as shown in FIGS. 5A and 5B. In this case, LED elements of the same type alone may be used as the LED elements 101, or alternatively, LEDs of different types, mixed together, may be used. The term "type" used herein refers to classifications according to a wavelength range of light that can be emit, a peak wavelength, a light emission intensity, an element size, etc.

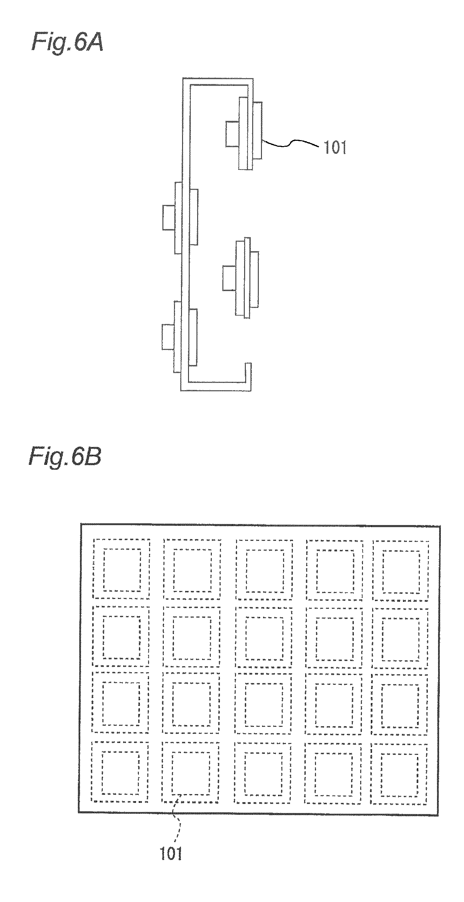

Alternatively, in the case where a plurality of LED elements 101 are provided, a configuration as shown in FIGS. 6A and 6B may be used, so as to further increase the light emitting element integration degree. In this configuration, as shown in FIG. 6B, the LED elements 101 are arranged two-dimensionally on a light emitting face. Besides, as shown in FIG. 6A, regarding its cross-sectional structure, adjacent ones of the LED elements 101 are formed in layers different from each other. By adopting such a three-dimensional arrangement, the integration degree of the LED elements 101 can be increased, whereby an infrared light emitting unit 204 having a greater light emission luminance can be provided. It should be noted that the LED elements 101 shown in FIGS. 6A and 6B are so-called reflection-type LED elements. In the structure shown in FIGS. 6, however, LED elements other than the reflection-type LED elements, or an infrared light source other than LED elements, may be used as the infrared light source. Though illustration is omitted, another wavelength cut filter 103 is also provided on an emission side of the LED elements 101, in the configuration shown in FIGS. 6A and 6B as well.

The LED elements 101 shown in FIGS. 2A and 2B, as well as FIGS. 5A and 5B are elements of a type that is called "bullet-shaped type". The type used for the infrared light source is not limited to this type, but the reflection-type LED elements 101 shown in FIGS. 6A and 6B, or an infrared light source other than the LED elements may be used.

Further, though infrared LEDs are mainly used in the cases described above, the configuration is not limited to this. Another light source, for example, a xenon lamp, or a laser, can be used.

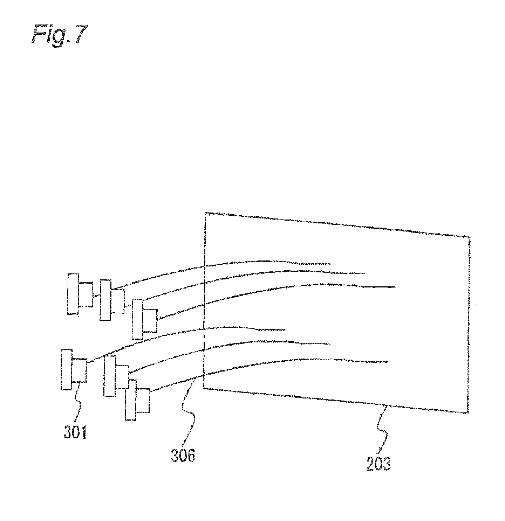

Further, the foregoing explanation describes a case where the infrared ray emitting unit 204 is located at a position corresponding to the central portion of the image display region of the screen 203, but the present invention is not limited to this configuration. The infrared ray emitting unit 204 may be located at a position other than the central portion of the screen 203, for example, at a corner or at an end. Further, the infrared ray emitting unit 204 may be placed, not in the vicinity of the back face of the screen 203, but at a position of a certain distance from the back face of the screen 203. For example, as shown in FIG. 7, infrared light may be guided to the screen 203 via an optical fiber 306 from an infrared ray source 301 located at a distance from the screen 203.

The present invention is not limited to the above-described embodiment, and may be modified variously within the scope shown by claims. Embodiments obtained by appropriate combinations of technical means disclosed herein also fall in the technical scope of the present invention.

Industrial Applicability

With the present invention, in the case where video images displayed on a screen are camcorded by a video camera or the like, display quality of the camcorded images can be degraded, without being recognized visually by an audience. Therefore, by using the anti-camcording device, the anti-camcording method, and the video image display system of the present invention in movie theaters and the like, the illegal camcording of image contents and unauthorized distribution of such image contents can be prevented.

**Claims**

**1.** An anti-camcording device that superposes infrared light on a video image displayed on a video image display section, so as to interfere with illegal camcording of the video image displayed on the video image display section, the anti-camcording device comprising:

an infrared light source that emits infrared light containing at least light of a wavelength of 780 nm or more, toward the video image display section; and
a wavelength cut filter provided before the infrared light source, which substantially does not transmit a predetermined wavelength component close to a visible light region, among light emitted from the infrared light source.

2. The anti-camcording device according to claim 1, wherein the predetermined wavelength component has a wavelength lower than a wavelength at which a luminance of the infrared light source becomes maximum.

3. The anti-camcording device according to claim 1 or 2, wherein the predetermined wavelength component is a component of 780 nm to 840 nm.

4. The anti-camcording device according to claim 1 or 2, wherein the predetermined wavelength component is a component of 780 nm to 870 nm.

5. The anti-camcording device according to any one of claims 1 to 4, wherein the wavelength cut filter has a characteristic of having a continuous change of 30 dB or more in a transition range between a light transmission range and a light blocking range.

6. The anti-camcording device according to claim 5, wherein in the transition range, a wavelength range having the continuous change of 30 dB or more exists between an upper limit wavelength of the predetermined wavelength component and the wavelength at which the infrared light source provides the maximum luminance.

7. The anti-camcording device according to claim 2, wherein the wavelength at which the infrared light source provides the maximum luminance is 920 nm or less.

8. The anti-camcording device according to any one of claims 1 to 7, wherein the infrared light has a luminance of 0.0062 nmW/cm$^2$ or more on a surface of the video image display section.

9. The anti-camcording device according to claim 8, wherein the infrared light has a luminance of 0.310 nmW/cm$^2$ or more on the surface of the video image display section.

10. The anti-camcording device according to any one of claims 1 to 9, wherein a luminance on a surface of the video image display section on which the infrared light is projected does not exceed 1.01 nmW/cm$^2$.

11. The anti-camcording device according to any one of claims 1 to 10, wherein a ratio of a luminance of the infrared light with respect to a luminance of a video image displayed on the video image display section is 0.012 or more.

12. The anti-camcording device according to claim 11, wherein the ratio of a luminance of the infrared light with respect to a luminance of a video image displayed on the video image display section is 0.59 or more.

13. The anti-camcording device according to any one of claims 1 to 12, wherein the infrared light source is any one of an LED, a laser, and a xenon lamp.

14. The anti-camcording device according to any one of claims 1 to 13, wherein the infrared light source emits light having a visible light wavelength.

15. The anti-camcording device according to any one of claims 1 to 14, wherein a plurality of the infrared light sources are provided.

16. An anti-camcording method of superposing infrared light on a video image displayed on a video image display section so as to interfere with illegally camcording of the video image displayed on the video image display section, the anti-camcording method comprising:

emitting infrared light containing at least light of a wavelength of 780 nm or more, toward the video image display section from an infrared light source; and

with use of a wavelength cut filter provided before the infrared light source, substantially prohibiting a predetermined wavelength component close to a visible light region, among light emitted from the infrared light source, from passing through the wavelength cut filter.

17. A video image display system comprising:

an image formation section that generates a display image according to a video image signal; and
a video image display section on which the image generated by the image formation section is displayed,
the video image display system further comprising:

an infrared light source that emits infrared light containing at least light of a wavelength of 780 nm or more, toward the video image display section; and
a wavelength cut filter provided before the infrared light source, which substantially does not transmit a predetermined wavelength component close to a visible light region, among light emitted from the infrared light source.

Fig.1

Fig.2A

104
101
102

105
103

Fig.2B

102

105
101
103

*Fig.3*

*Fig.4*

Fig.5A

Fig.5B

*Fig.6A*

101

*Fig.6B*

101

Fig.7

301

306

203

## INTERNATIONAL SEARCH REPORT

| | International application No. |
|---|---|
| | PCT/JP2011/054265 |

A.  CLASSIFICATION OF SUBJECT MATTER
*G03B21/00*(2006.01)i, *G03B21/56*(2006.01)i, *H04N5/225*(2006.01)i, *H04N5/232* *(2006.01)i, H04N5/74*(2006.01)i

According to International Patent Classification (IPC) or to both national classification and IPC

B.  FIELDS SEARCHED

Minimum documentation searched (classification system followed by classification symbols)
G03B21/00, G03B21/56, H04N5/225, H04N5/232, H04N5/74

Documentation searched other than minimum documentation to the extent that such documents are included in the fields searched
Jitsuyo Shinan Koho          1922–1996     Jitsuyo Shinan Toroku Koho     1996–2011
Kokai Jitsuyo Shinan Koho     1971–2011     Toroku Jitsuyo Shinan Koho     1994–2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2009-282270 A  (Nippon Hoso Kyokai), 03 December 2009 (03.12.2009), paragraph [0011] (Family: none) | 1-17 |
| Y | JP 2002-341449 A  (Sony Corp.), 27 November 2002 (27.11.2002), paragraph [0105] & US 6742901 B2          & EP 1261201 A2 | 1-17 |
| Y | JP 2010-020263 A  (Kabushiki Kaisha iSAFE), 28 January 2010 (28.01.2010), paragraph [0019]; fig. 3 & US 2010/0008501 A1 | 1-17 |

☒   Further documents are listed in the continuation of Box C.          ☐   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 March, 2011 (14.03.11) | 22 March, 2011 (22.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/054265 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 102731/1987(Laid-open No. 009337/1989) (Sony Corp.), 19 January 1989 (19.01.1989), page 9; fig. 4 (Family: none) | 1-17 |
| P,Y | JP 2010-231748 A (Kabushiki Kaisha iSAFE), 14 October 2010 (14.10.2010), paragraph [0021] & US 2010/0008501 A1 | 1-17 |
| P,A | WO 2011/002059 A1 (Sharp Corp.), 06 January 2011 (06.01.2011), entire text; all drawings (Family: none) | 1-17 |

Form PCT/ISA/210 (continuation of second sheet) (July 2009)

**EP 2 541 320 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002341449 A

- JP 2010020263 A